# EUROPEAN PATENT APPLICATION

(11) **EP 2 495 562 A2**
(43) Date of publication of application: **05.09.2012**
(21) Application number: 10826987.9
(22) Date of filing: 06.10.2010
(51) Int. Cl.: G01N 29/24, G01Q 70/08

(54) **TWO-DIMENSIONAL VIRTUAL ARRAY PROBE FOR THREE-DIMENSIONAL ULTRASONIC IMAGING**

(30) Priority: 28.10.2009 KR 20090103036
(71) Applicant: Robogen, Seoul 120-749 (KR); Water Resources Engineering Corporation, Seongnam-si, Gyeonggi-do 463-070 (KR)
(72) Inventor: Ohm, Won-suk, Seoul 110-877 (KR); Choi, Young-soo, Yongin-si Gyeonggi-do 446-954 (KR)
(74) Representative: Belloni, Giancarlo
(86) International application number: PCT/KR2010/006814
(87) International publication number: WO 2011/052902

(57) **Abstract**

Provided is a 2-dimensional virtual array probe for 3-dimensional ultrasonic imaging. The probe includes: an ultrasonic transducer; a metallic probe body including an ultrasonic wave emission surface in which a plurality of wave-guides are arranged in 2-dimensional, array and a 1/8 sphere-shaped recess for irregularly reflecting ultrasonic wave emitted from the ultrasonic transducer in an inside thereof; a piezoelectric sheet arranged on the ultrasonic wave emission surface to make contact with an object to be inspected and configured to pass the ultrasonic waves emitted from the probe toward the object to be inspected and output a signal by detecting the ultrasonic waves reflected from the object to be detected; and a control unit configured to control the ultrasonic transducer so that the plurality of wave-guides sequentially generate ultrasonic wave.

## Description

### Field of the Invention

The present invention relates to development of an ultrasonic probe, which is used for ultrasonic image diagnosis and non-destructive inspection, and more particularly, to a 2-dimensional virtual array probe for real-time 3-dimensioanl ultrasonic imaging.

### Background Art

In general, a widely used 2-dimension array probe includes piezoelectric elements as many as thousands, forms an array by fixedly arranging ultrasonic transducers at regular intervals, which are capable of transmitting/receiving ultra-sonic waves, and detects a defect in an object to be inspected by using a pulse-echo method.

As an example of currently commercialized ultrasonic non-destructive inspection apparatus, a 60x60 array probe may be exemplified. In this case, total 3600 ultrasonic transducers are needed and the respective 3600 ultrasonic transducers are controlled using the respective 3600 channels to obtain a 3-dimensional image. However, according to this configuration, since the ultrasonic transducers have to be provided for each channel, there is a problem of highly costing for configuring a system.

To solve such a problem, a lot of researches have been progressed. A paper (G. montaldo. D. Palacio, M. Tanter, M. Fink, IEEE Trans. Ultrson., Ferroelect., Freq. Contr: 52(2005), 1489-1497) discloses a method of configuring ultrasonic non-destructive apparatus which can obtain a similar effect and reduce the number of the transducers as compared with the related art.

However, the method disclosed in the paper has a problem that a plurality of transducers are also used and ultrasonic beam is rapidly spread after being focused at a focal point due to a characteristic of a time inversion method of the related art. That is, since the ultrasonic wave generated from the transducer is not transmitted in parallel to the object to be inspected and has a property of instantly spreading after being focused at the focal point, there is a problem having a difficulty in implementing the pulse-echo type non-destructive inspection using such a sound beam.

### Detailed Description of the Invention

### Problems to be Solved by the Invention

The present invention have been made in view of the above problems, and unlike a 2-dimensional array probe including thousands of the piezoelectric-elements in the related art, provide a 2-dimensional virtual array probe for 3-dimensional ultrasonic imaging, of which structure is improved to generate an irregular internal reflection.

### Means for Solving the Problem

The 2-dimensional virtual array probe for 3-dimensional ultrasonic imaging includes: an ultrasonic transducer; a metallic probe body including an ultrasonic wave emission surface in which a plurality of wave-guides are arranged in 2-dimensional array and a 1/8 sphere-shaped recess for irregularly reflecting ultrasonic wave emitted from the ultrasonic transducer in an inside thereof; a piezoelectric sheet arranged on the ultrasonic wave emission surface to make contact with an object to be inspected and configured to pass the ultrasonic waves emitted from the probe toward the object to be inspected and output a signal by detecting the ultrasonic waves reflected from the object to be detected; and a control unit configured to control the ultrasonic transducer so that the plurality of wave-guides sequentially generate ultrasonic wave.

The probe body may include an aluminum material.

In plurality of wave-guides, each probe may have a same cross-sectional area and height as one side surface of the probe body is processed.

A radius of the recess may have a size of 30-40% of the height of the probe body.

The ultrasonic transducer may be installed in any surface other than the ultrasonic wave emission surface of the probe body.

### Effect of the Invention

According to the present invention, it is possible to provide inspection equipment which has a performance similar to the non-destructive inspection apparatus using the plurality of ultrasonic waves, with only one ultrasonic transducer, thereby reducing a unit price of the non-destructive inspection apparatus.

### Brief Descriptions of the Drawings

FIG. 1 is a view illustrating a configuration of a probe of a non-destructive inspection apparatus according to the present invention.

FIG. 2 is an exploded perspective view of FIG. 1.

FIG. 3 is a graph of a signal received at an end of a wave-guide prior to time inversion.

FIG.4 is a graph of a signal in which the signal of FIG. 3 is time-inverted.

FIGS. 5 and 6 are graphs showing pulse signals focused on a time axis, which are generated through ultrasonic transducer using software.

FIG. 7 is a graph showing an example of a pulse-echo signal converted into a distance.

### Mode for Carrying out the Invention

Hereinafter, a preferable embodiment of the present invention will be described with reference to the accompanying drawings.

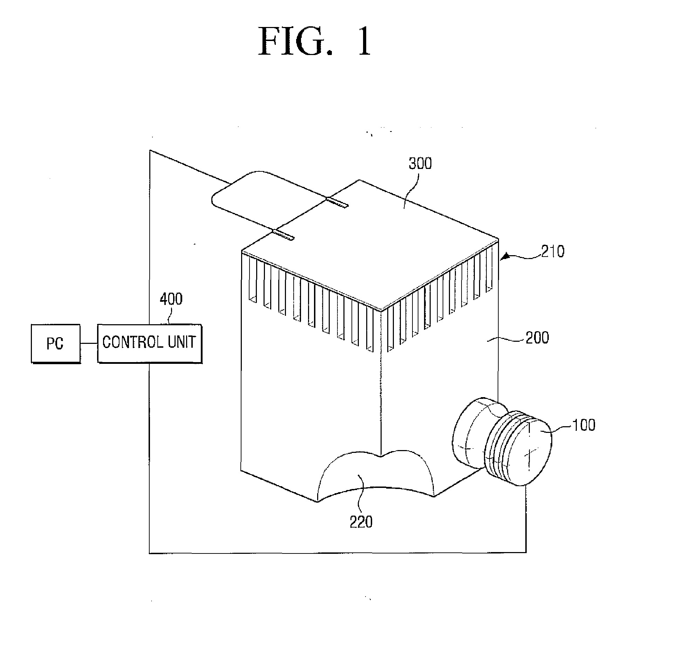

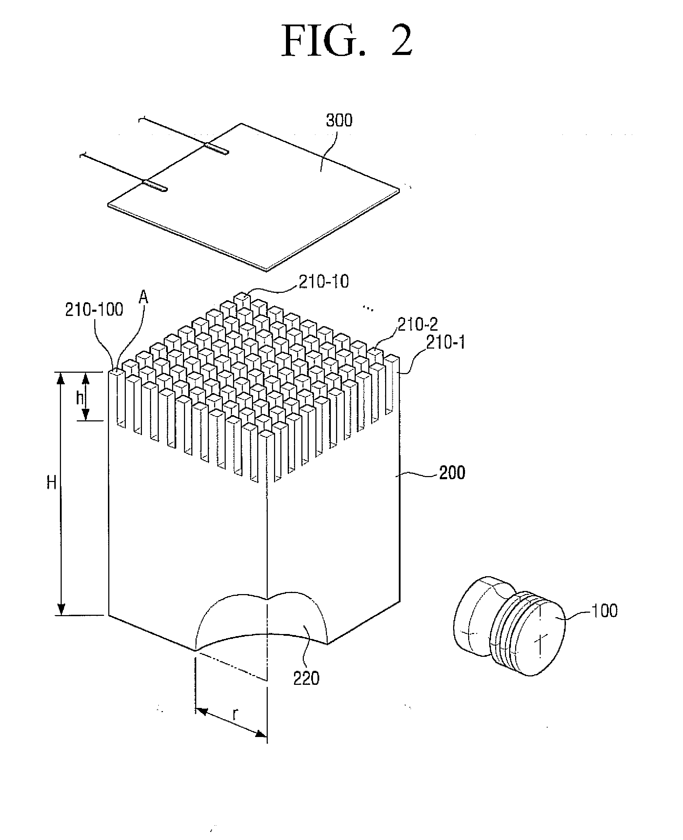

As shown in FIGS. 1 and 2, a 2-dimensional virtual array probe for 3-dimensional ultrasonic imaging according to the present invention, includes an ultrasonic transducer 100, a probe body 200, a piezoelectric sheet 300, and a control unit 400.

The ultrasonic transducer 100 corresponds to a signal generation unit and receives a pulse signal corresponding to 5Mhz to generate an ultrasonic signal using a signal generator and a power amplifier, which are not shown in drawing. At this time, an amplitude of the generated pulse signal is changed depending on a location of a wave-guide, in which a ultrasonic wave is to be generated, and is obtained experimentally.

The probe body 200 is provided in a hexahedral shape having a square-shaped cross-sectional area. A plurality of wave-guides 210 is formed in one side surface of the probe body 200 and the probe body 200 includes a recess 220 for irregularly reflecting the ultrasonic waves received from the ultrasonic transducer 100.

According to an embodiment of the present invention, although the wave-guide 210 has been configured to form total 100 channels (210-1∼210-100) with a 10x10 array, the present invention is not limited thereto and according to the user's need, the wave-guide 210 may be configured with different arrays, for example, total 400 channels with a 20x20 array, or total 3600 channels with a 60x60 array. In addition, the wave-guide 210 forms scan lines to transmit the ultrasonic waves.

One surface of the probe body 200 is formed using a machine tool such as lathes so that the wave-guides 210 have the same cross-sectional area A and height h. The object to be inspected is located on a top surface of the wave-guides 210.

The recess 220 is formed to have a 1/8 sphere shape and when assuming that the height of the probe body 200 is H, it is preferable that the radius r of the sphere have about 20∼30% value of the height H.

In addition, as shown in FIGS. 1 and 2, it is preferable that the recess 220 be formed in at least 3 surfaces of the probe body 200. According to this configuration, the ultrasonic wave generated from the ultrasonic transducer 100 has a chaotic motion in the probe body 200, thereby transmitting the ultrasonic signal through only one of the plurality of wave-guides 210 selected by the user.

The piezoelectric sheet 300 is attached to the surface in which the wave-guides are formed of the probe body 200 and the object to be inspected is placed thereon. The piezoelectric sheet 300 transmits the ultrasonic wave and detects a reflective signal reflected from the object to be inspected.

The control unit 400 includes an RF amplifier connected to the ultrasonic transducer 100 and the piezoelectric sheet 300 to drive/control the ultrasonic transducer 100, a signal generator, and a signal processor, which collects reflective signal information according to ultrasonic scan lines formed for the plurality of the wave-guides 210 and analyzes the reflective signal information, and the like. The operations of the control unit 400 will be described in detail.

Hereinafter, an operation of the 2-dimensional virtual array probe for 3-dimensional ultrasonic imaging will be described in detail.

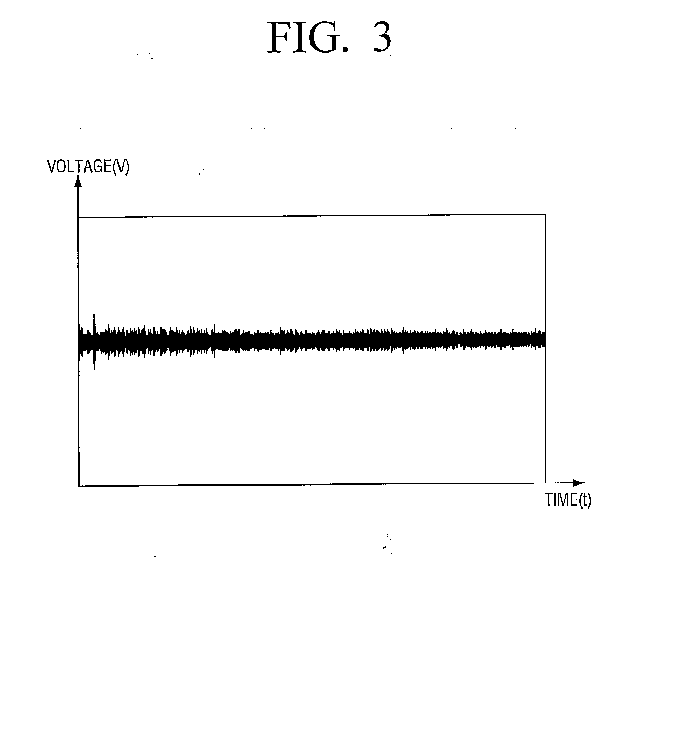

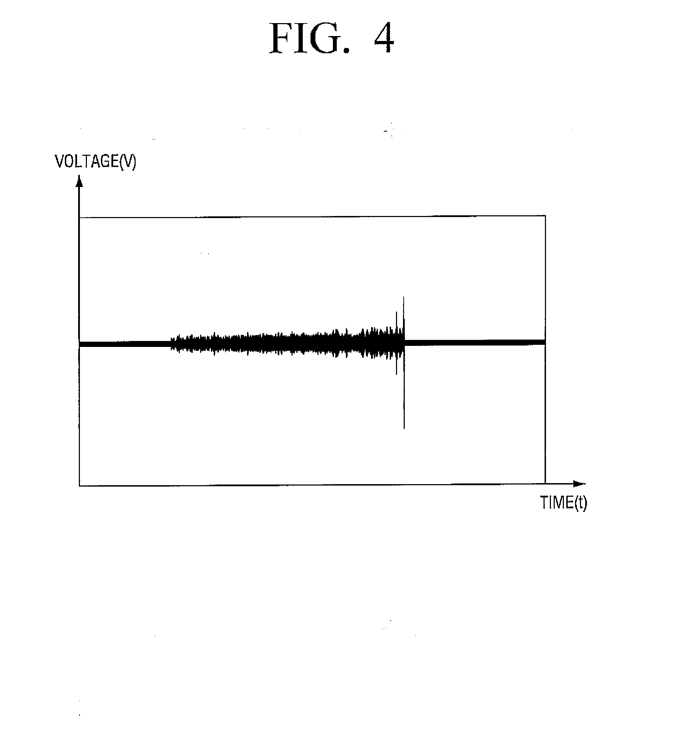

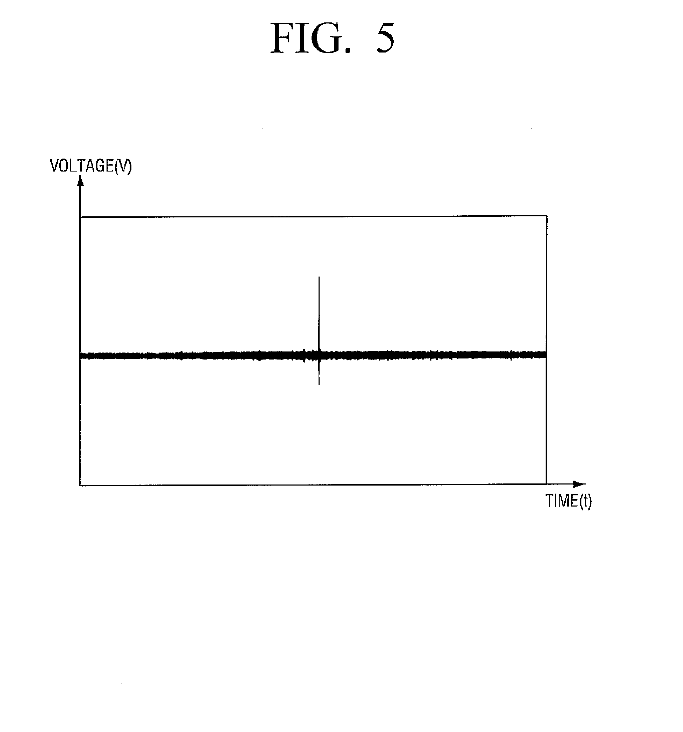

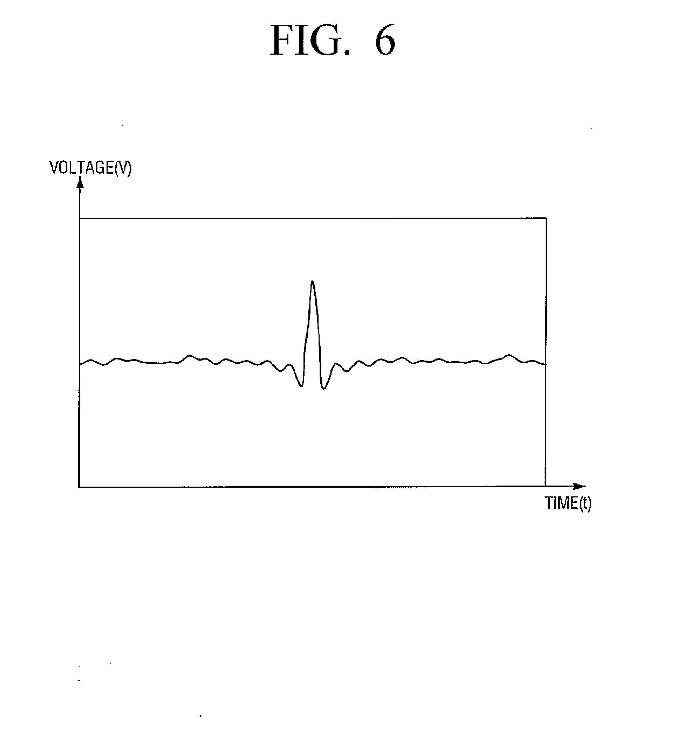

First, the user changes a frequency of about 5MHz band by using the RF amplifier and the signal generator provided in the control unit 400 to vibrate the end of any one 210-1of the wave-guides as shown in FIG. 3, and makes a signal as shown in FIG. 4 by time inversion of the signal of FIG. 3. The signal made by this method is supplied to the signal generator and power amplifier to allow the ultrasonic transducer 100 to generate the ultrasonic wave. At this time, since the sound beam signal output from the corresponding wave-guide 210-1 has a pulse form focused on the time axis as shown in FIGS. 5 and 6, it is possible to secure resolution according to a progressing direction. According to this method, the respective wave-guides 210-1∼210-n generate ultrasonic waves to form scanning channels.

Theses operations are possible because the 1/8 sphere-shaped recess 220 is formed in the probe body 200. That is, the ultrasonic wave generated from the ultrasonic transducer 100 has an irregular motion in the probe body 200, due to a shape of the recess 220. Accordingly, when appropriately adjusting the waveform of the ultrasonic wave generated from the transducer 100 using a principal of time inversion, it is possible to deliver the ultrasonic wave generated from the ultrasonic transducer 100 through only one of the plurality of the wave-guides 210, which are formed in the one surface of the probe body 200. Accordingly, if it is possible to calculate an appropriate waveform through an experiment, which can vibrate the respective wave-guides 210-1∼210-n, an independent scanning channel can be formed using the waveform value.

As described above, when the waveforms depending on the respective wave-guides 210 are determined, the control unit 400 may scan the object to be inspected placed on the wave-guides 210 according to channels, while changing the waveform in a regular cycle.

Meanwhile, the piezoelectric sheet 300 is arranged between the wave-guides 210 and the object to be inspected to allow the ultrasonic signal generated from the wave-guides 210 to be transmitted and the ultrasonic signal reflected from the object to be inspected to be detected.

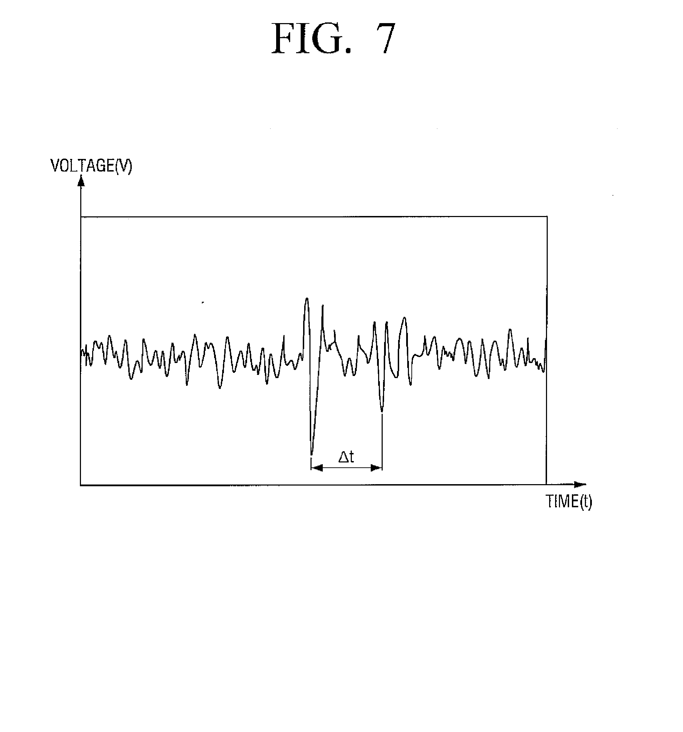

Theses obtained signal can be processed using software loaded on a personal computer (PC). As shown in FIG. 7, it is possible to obtain information about a thickness of a material of the object to be inspected, location of defect, and the like when converting as a distance by multiplying a time of flight (Δt) between the pulses by sound speed.

For example, when an ultrasonic wave is generated through a first wave-guide 210-1 corresponding to a first channel, a signal detected during activation of the first channel is confirmed as a reflective signal of the first channel; and when another ultrasonic wave is generated through a second wave-guide 210-2, another signal detected during activation of the second channel is confirmed as another reflective signal of the second channel. It is possible to detect scanning signals of all channels with the same method, thereby obtaining a 3-dimensional diagnosis image of the object to be inspected.

According to the present invention described above, it is possible to configure independent scanning channels according to the respective wave-guides, thereby not being in need of an ultrasonic focusing process which uses a single ultrasonic transducer in the related art. In addition, compared to an array type of probe which uses a plurality of ultrasonic transducers, it is possible to configure apparatus at a low cost.

## Claims

1. A 2-dimensional virtual array probe for 3-dimensional ultrasonic imaging, comprising:
an ultrasonic transducer;
a metallic probe body including an ultrasonic wave emission surface in which a plurality of wave-guides are arranged in 2-dimensional array and a 1/8 sphere-shaped recess for irregularly reflecting ultrasonic wave emitted from the ultrasonic transducer in an inside thereof;
a piezoelectric sheet arranged on the ultrasonic wave emission surface to make contact with an object to be inspected and configured to pass the ultrasonic waves emitted from the probe toward the object to be inspected and output a signal by detecting the ultrasonic waves reflected from the object to be detected; and
a control unit configured to control the ultrasonic transducer so that the plurality of wave-guides sequentially generate ultrasonic wave.

2. The probe according to claim 1, wherein the probe body includes an aluminum material.

3. The probe according to claim 1, wherein in the plurality of wave-guides, each probe has a same cross-sectional area and height as one side surface of the probe body is processed.

4. The probe according to claim 1, wherein the plurality of wave-guides are horizontally and vertically arranged at regular intervals.

5. The probe according to claim 1, wherein a radius of the recess has a size of 30∼40% of the height of the probe body.

6. The probe according to claim 1, wherein the ultrasonic transducer is installed in any surface other than the ultrasonic wave emission surface of the probe body.
